# EUROPÄISCHE PATENTSCHRIFT

(11) **EP 1 269 065 B1**
(45) Veröffentlichungstag und Bekanntmachung des Hinweises auf die Patenterteilung: **09.07.2003**
(21) Anmeldenummer: 01915399.8
(22) Anmeldetag: 22.03.2001
(51) Int. Cl.: F16L 37/12

(54) **EINSTÜCKIGE, AUS FEDERSTAHLBLECH GEBOGENE STECKKLAMMER FÜR FLANSCHVERBINDUNGEN**
SINGLE-PIECE SLIDE-ON CLAMP WHICH IS BENT OUT OF SPRING SHEET STEEL, FOR FLANGE COUPLINGS
COLLIER D'UNE SEULE PIECE CONSTITUE D'UNE TOLE D'ACIER A RESSORT PLIEE DESTINE A DE JOINTS A BRIDES

(30) Priorität: 25.03.2000 DE 10015028
(43) Veröffentlichungstag der Anmeldung: 02.01.2003
(73) Patentinhaber: Ebinger, Günther, 71522 Backnang (DE)
(72) Erfinder: EBINGER, Günther, 71522 Backnang (DE); ROSER, Alexander, 73642 Welzheim (DE)
(74) Vertreter: Wittner, Walter
(86) Internationale Anmeldenummer: EP0103248
(87) Internationale Veröffentlichungsnummer: WO01073337

(56) Entgegenhaltungen:
- EP-A- 0 919 760
- DE-A- 19 728 973
- US-A- 5 348 353
- US-A- 5 820 168

## Beschreibung

Die Erfindung betrifft eine einstückige, aus Federstahlblech gebogene Steckklammer für Flanschverbindungen, insbesondere für Flanschverbindungen von Abgasrohren von Kraftfahrzeugen, gemäß dem Oberbegriff des Anspruches 1.

Für Flanschverbindungen in Kraftfahrzeugabgasrohren ist es aus der DE 44 44 550 A1 bekannt, diese über auf die Rohre axial aufgefädelte, sich gegen die Flansche abstützende und axial gegeneinander zu verspannende Tellerfedern zu verbinden. Die konstruktiven Voraussetzungen für derartige Federspanneinrichtungen bedingen gewisse Einschränkungen hinsichtlich ihres Einsatzes, insbesondere unter Montagegesichtspunkten.

Die Ausbildung derartiger Federspanneinrichtungen als Steckklammern erbringt insbesondere unter Montagegesichtspunkten erweiterte Einsatzmöglichkeiten, wobei eine einstückige, aus Federstahlblech gebogene Steckklammer der eingangs genannten Art aus der DE 197 28 973 A1 bekannt ist. Bei dieser bekannten Lösung weist die Steckklammer einen im Querschnitt U-förmig gebogenen über seine Länge querschnittsgleichen Federrücken auf, dessen längs des Steges verlaufende, einander gegenüberliegende Schenkel im Bereich ihrer Enden jeweils quer zum Steg verlaufende, die Schenkel verlängernde Federarme tragen, so dass die Steckklammer, die zu verbindenden Rohre von der Seite her übergreifend, auf diese aufschiebbar ist und sich mit ihren Federarmen gegen die voneinander abgewandten Seiten der den zu verbindenden Rohren zugeordneten Flansche abstützt, bei zur axialen Verspannung überlagerter Zentrierung der Flanschverbindung.

Aus der US 5 350 201 ist eine Mutternsicherung für über eine Spannmutter axial zu verspannenden Rohrabschnitte bekannt, von denen einer als Gegenstück zur mehreckigen Spannmutter, einen mehreckigen Umfangsabschnitt aufweist. Die Mutternsicherung umfasst je eine vielzahnige, auf die Spannmutter bzw. den mehreckigen, axial beabstandeten Umfangsabschnitt seitlich aufschiebbare hufeisenförmige Spannklammer. Die beiden Spannklammern sind über einen axial in Richtung der Rohrachse verlaufenden Anschlusssteg im Abstand zueinander festgelegt und drehfest miteinander verbunden.

Des Weiteren ist aus der DE 41 01 849 A1 für Flanschverbindungen eine seitlich auf diese aufsteckbare Flanschklammer bekannt, die als Drahtklammer ausgebildet ist und deren die Flansche axial und radial auf gegenüberliegenden Seiten übergreifende Drahtfederarme sich bei etwa parallelem Verlauf senkrecht zu einem Federrücken erstrecken, der durch eine Rückenplatte oder durch die Federarme verbindende Übergangsstücke gebildet ist.

Für eine Steckklammer der eingangs genannten Art den Auslegungsspielraum mit einfachen konstruktiven Mitteln zu erweitern, ohne dadurch die Fertigung der Steckklammer zu erschweren, liegt der Erfindung als Aufgabe zugrunde.

Weitere Einzelheiten und Merkmale der Erfindung ergeben sich aus den Unteransprüchen. Ferner wird die Erfindung nachstehend mit weiteren Merkmalen anhand der Zeichnungen näher erläutert.
Es zeigen:
- Figur 1: eine schematisierte Darstellung einer Steckklammer gemäß der Erfindung in Draufsicht, wobei die den Federarmen zugeordneten Stegbereiche der Steckklammer gleichsinnig zur Rohrkrümmung der über die Flansche verbundenen Rohre geneigt sind,
- Figur 2: eine Seitenansicht der Steckklammer gemäß Figur 1 in Richtung des Pfeiles II,
- Figur 3: eine weitere Seitenansicht der Steckklammer gemäß Figur 1 in Richtung des Pfeiles III in Figur 1,
- Figur 4: eine Prinzipdarstellung eines Zuschnittes für eine Steckklammer gemäß den Figuren 1 bis 3,
- Figur 5: eine der Figur 1 entsprechende Darstellung mit gleichachsiger, fluchtender Lage der den Federarmen zugeordneten Stegbereiche, und
- Figur 6: eine weitere der Figur 1 entsprechende Darstellung, bei der, im Gegensatz zu Figur 4, die den Federarmen zugeordneten Stegbereiche gegensinnig zur Rohrkrümmung gegeneinander geneigt sind.

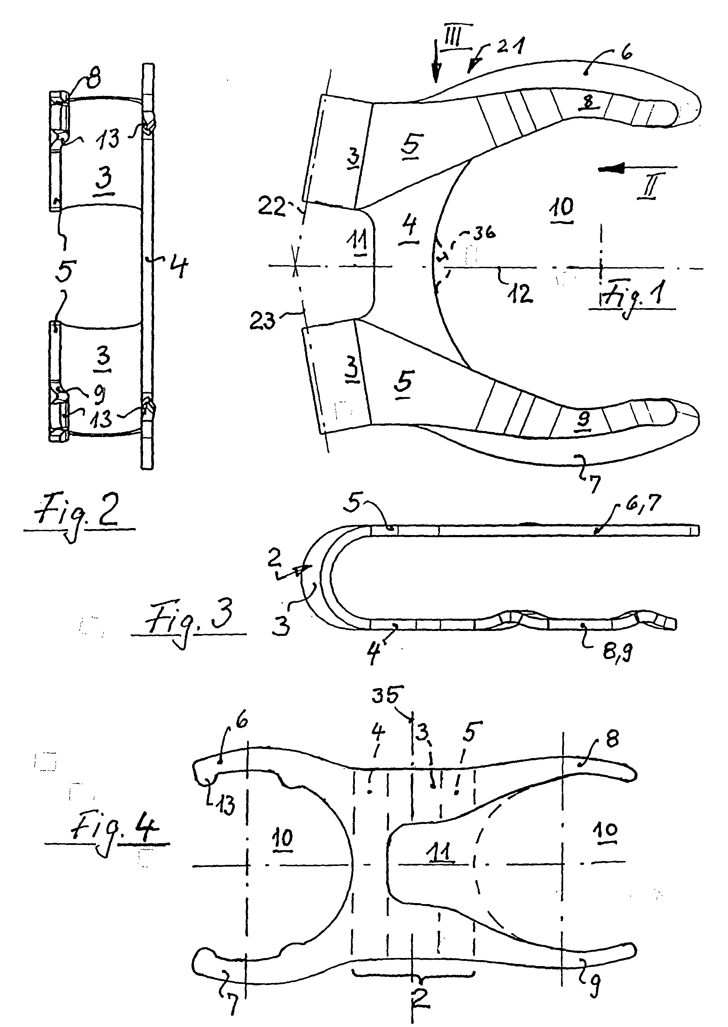

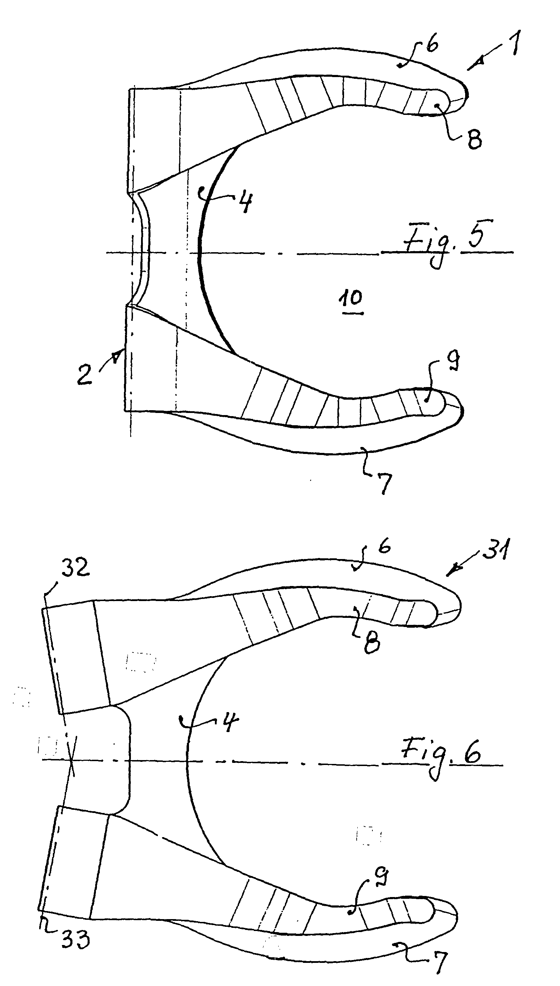

In den Zeichnungen zeigen die Figuren 1, 5 und 6 jeweils in Draufsicht Steckklammern gleichen Grundaufbaus, zu denen Figur 4 die Grundstruktur eines ebenen Zuschnittes zeigt, wobei der in Figur 4 gezeigte Zuschnitt im Konkreten die Ausgangsbasis für eine Steckklammer gemäß Figur 5 mit gleichachsiger, fluchtender Lage der den Federarmen zugeordneten Federrückenbereiche bildet.

Dementsprechend wird die erfindungsgemäße Steckklammer zunächst anhand der Figuren 4 und 5 in ihrem grundsätzlichen Aufbau erläutert.

Die Steckklammer gemäß Figur 5 ist insgesamt mit 1 bezeichnet und ist, wie Figur 4 veranschaulicht, aus einem ebenen, einstückigen Federstahlblech in ihre U-förmige Grundform gebogen (siehe Figur 3), wobei die Steckklammer 1 einen im Querschnitt U-förmigen Federrücken aufweist, der mit 2 bezeichnet ist und der einen Steg 3 umfasst. In Querrichtung geht der Steg 3 in einander gegenüberliegende Schenkel 4 und 5 über, wobei dieser Übergang bevorzugt allmählich erfolgt, so dass der Federrücken 2, der den Steg 3 und die Schenkel 4 und 5 umfasst, im Querschnitt bevorzugt in Annäherung gewölbte, insbesondere kreisbogenförmige Form aufweist, auch wenn hiervon abweichende Ausgestaltungen mit zur Längsachse 35 des Steges 3 abknickenden Schenkeln 4 und 5 im Rahmen der Erfindung möglich sind.

In Figur 4 ist strichliert der im gebogenen Zustand den Federrücken 2 bildende Bereich des Zuschnittes in entsprechender Unterteilung angedeutet, wobei schematisiert der Bereich des Steges 3 und die Bereiche der Schenkel 4 und 5 strichliert gegeneinander abgegrenzt sind.

Die Schenkel 4 und 5 tragen, in Längsrichtung des Steges 3 beabstandet, Federarme 6, 7 bzw. 8, 9 wobei die Federarme 6, 7 an den Schenkel 4 anschliessen, während die Federarme 8, 9 vom Schenkel 5 ausgehen. Die einem Schenkel 4 bzw. 5 des Steges 3 zugeordneten Federarme 6, 7 bzw. 8, 9 bilden jeweils ein Federarmpaar und die Federarme 6, 7 bzw. 8, 9 des jeweiligen Federarmpaares bilden seitliche Begrenzungen eines Aufnahmeraumes 10 für eine nicht dargestellte Flanschverbindung eines Rohrstranges, auf den die Steckklammer 1 seitlich aufgeschoben werden kann, wobei jeweils die Federarme 6, 7 bzw. 8, 9 eines Federarmpaares eine der voneinander abgewandten Seiten der gegeneinander zu verspannenden Flansche beaufschlagen, über die der im Bereich der Flanschverbindung geteilte Rohrstrang axial zusammengehalten und gegebenenfalls auch zentrierend ausgerichtet wird.

Bei der gezeigten Konstruktion der Steckklammer 1 ist der den Steg 3 und die Schenkel 4, 5 aufweisende Federrücken 2 im zwischen den Federarmen 8, 9 des einen Federarmpaares liegenden Bereich mit einem Ausschnitt 11 versehen, durch den der Federrücken 2 im Bereich des die Federarme 8, 9 tragenden Schenkels 5 bis hinein in den Bereich des Steges 3 unterbrochen wird, so dass die Federarme 8, 9 des dem Schenkel 5 zugeordneten Federarmpaares in der gezeigten Ausgestaltung nur über verbleibende Endbereiche des Steges 3 mit dem Schenkel 4 verbunden sind, der die Federarme 6, 7 des anderen Federarmpaares trägt. Der Ausschnitt 11 kann, wie in Figur 4 angedeutet, den Steg 3 in Querrichtung, d.h. über seine ganze Breite oder auch'nur über einen Teil seiner Breite unterbrechen, so dass im Extrem jeweils in axialer Spannrichtung der U-förmigen Steckklammer 1 einander entsprechende und gegenüberliegende Federarme 6 und 8 bzw. 7 und 9 eine weitgehend unabhängig wirkende Klammer bilden und die beiden, durch die Federarme 6, 8 bzw. 7, 9 gebildeten Klammern lediglich über den Schenkel 4 verbunden sind, der die Federarme 6, 7 eines Federarmpaares trägt. Hierdurch ist es möglich, bei einstückiger Ausbildung der Steckklammer 1 und Herstellung derselben aus einem gestanzten Flachmaterial unterschiedliche Federauslegungen bei gleichem Grundaufbau zu realisieren, wobei über die einander entsprechenden Federarme 6, 8 bzw. 7, 9 der beiden Federpaare die axiale Spannkraft individuell eingestellt werden kann, und ebenso die quer hierzu wirkenden, zentrierenden Spannkräfte der Federarme 6, 7 bzw. 8, 9 des jeweiligen Federarmpaares in weitem Rahmen variiert werden können, so dass speziellen Einbaugegebenheiten und dadurch bedingten unterschiedlichen Belastungsverhältnissen bei gleichem Grundaufbau der Feder Rechnung getragen werden kann.

Während anhand der Figuren 4 und 5 der grundsätzliche Aufbau und eine zweckmäßige Ausgestaltung der Steckklammer 1 dargestellt sind und erläutert wurden, zeigen die Draufsichten gemäß Figuren 1 und 6 Abwandlungen dieses Grundprinzips, wobei in Verbindung mit Figur 1 der Aufbau der dort gezeigten Steckklammer 21 in den Ansichten gemäß Figuren 2 und 3 verdeutlicht ist. Für die Erläuterung der Steckklammer 21 gemäß Figur 1 und der Steckklammer 31 gemäß Figur 6 finden im übrigen wiederum die in Verbindung mit den Figuren 4 und 5 verwendeten Bezugszeichen Anwendung.

Figur 1 zeigt für die Steckklammer 21 im Bereich des Federrükkens 2 wiederum einen Ausschnitt 11, durch den der Federrücken 2 über den Schenkel 5 und den Steg 3 aufgetrennt ist, so dass die Arme 8 und 9 des dem Schenkel 5 zugeordneten Federarmpaares mit den entsprechenden Armen 6 und 7 des gegenüberliegenden Federarmpaares bezogen auf die Steckklammer 21 weitgehend eigenständige axiale Klammerbereiche bilden, die lediglich über den Schenkel 4 des die Arme 6 und 7 umfassenden Federarmpaares verbunden sind, so dass in Bezug auf die jeweils zusammenwirkenden Federarme 6 bzw. 8 und 7 bzw. 9 der gegeneinander arbeitenden Federpaare eine weitgehend individuelle Auslegung möglich ist.

Hierbei bietet die Gestaltung gemäß Figur 1 zusätzliche Möglichkeiten dadurch, dass die durch die bogenförmig, insbesondere halbkreisförmig gebogenen Stegteile 3 bestimmten Schwenkachsen 22, 23 für die jeweils axial zusammenwirkenden Federarme 6, 8 bzw. 7, 9 winklig, insbesondere unter einem flachen Winkel zueinander angestellt sind, derart, dass die beiderseits des Ausschnittes 11 liegenden Bereiche des Federrückens in der Ausgestaltung gemäß Figur 1 gleichsinnig zur Rohrkrümmung bzw. zum Aufnahmeraum 10 winklig gegeneinander angestellt sind, die Schwenkachsen 22, 23 für die Federarme 6, 8 bzw. 7, 9 also dachförmig geneigt zueinander stehen und sich im Bereich der zur Längsachse 35 senkrechten Querachse bzw. Querebene 12 schneiden. Dies ermöglicht für die Steckklammer 21 einen besonders raumsparenden Aufbau, zumal es im Rahmen der Erfindung möglich ist, den jeweils winklig angestellten Bereichen des Federrückens 2 auch unterschiedliche Neigungen zu geben, womit auch Einfluss genommen werden kann auf die jeweiligen, über die Federarme 8 bzw. 9 aufgebrachten und über die Federarme 6, 7 des gegenüberliegenden Federarmpaares abgestützten Kräfte. Die Schwenkachsen 22, 23 sind in Figur 1 schematisch angedeutet. Auf die Verteilung und die Wirkrichtung der in Bezug auf die Rohrachse in den flanschseitigen Anlagepunkten wirkenden, radialen Kraftanteile kann erfindungsgemäß dadurch Einfluss genommen werden, dass der Steckklammer, wie in Figur 1 für die Steckklammer 21 angedeutet, ein gegen das Rohr, bzw. den Flansch wirkender und dadurch die radiale Ausrichtung begrenzender, hier bei 36 angedeuteter Anschlag zugeordnet wird.

Figur 6 zeigt eine Ausgestaltung in Verbindung mit einer Steckklammer 31, bei der die entsprechenden Schwenkachsen mit 32 und 33 bezeichnet sind, wobei diese Schwenkachsen 32, 33 gegensinnig zur Rohrkrümmung, und damit entgegengesetzt zur Umfangskrümmung der der über die Steckklammer 31 zusammenzuhaltenden Flanschverbindung angestellt sind. Diese Ausgestaltung ermöglicht im Bereich des Federrückens 2 eine besonders schlanke Bauweise und ermöglicht eine besonders günstige Kraftaufnahme in Bereich des Federrückens 2 mit einer spannungsmäßigen Entlastung der voneinander abgewandten Randzonen der Arme 8, 9 im Bereich des Federrückens 2, so dass eine derart ausgestaltete Steckklammer 31 insbesondere auch zum Aufbringen hoher Spannkräfte geeignet ist. Die Neigung der in Richtung auf das Zentrum des Aufnahmeraumes 10 angestellten Schwenkachsen 32 und 33 kann auch bei dieser Ausgestaltung unterschiedlich sein, wobei eine bevorzugte Lösung einen Schnittpunkt der Schwenkachsen 22, 23 gemäß Figur 1, bzw. 32, 33 gemäß Figur 6 in der Quermittelebene 12 der Steckklammer 1 bei symmetrischem Aufbau derselben vorsieht.

Figuren 2 bis 4 veranschaulichen, dass die Federarme 6 bis 9 in bekannter Weise bevorzugt mit Vorsprüngen, Ausprägungen oder dergleichen versehen sind, wie sie in den Figuren 2 bis 4 allgemein mit 13 angedeutet sind, über die sie sich gegen entsprechende Teile der Flanschflächen der hier nicht gezeigten Flanschverbindung abstützen, so dass lediglich eine in Annäherung punktuelle Berührung zwischen den jeweiligen Federarmen 6 bis 9 und den zugehörigen Flanschflächen stattfindet, was im Hinblick auf die Anpassung zwischen Flanschen und Steckklammer sowie auch bezüglich der Wärmeeinleitung in die Steckklammer zweckmäßig ist.

## Patentansprüche

1. Einstückige, aus Federstahlblech gebogene Steckklammer für Flanschverbindungen, insbesondere für Flanschverbindungen von Abgasrohren von Kraftfahrzeugen, mit im Querschnitt U-förmigem, eine Längsachse aufweisendem Federrücken, der über einen in Flucht zur Längsachse verlaufenden Steg verbundene, in Querrichtung des Steges einander gegenüberliegende und den Längsseiten des Steges zugeordnete Schenkel aufweist, von denen jeweils zwei Federarme ausgehen, die in Längsrichtung des Steges zueinander beabstandet sind, ein Federarmpaar bilden und einander gegenüberliegenden Seiten eines Aufnahmeraumes für die Flansche zugeordnet sind, der zwischen den Federarmen eines Federarmpaares von einer Kante eines Schenkels des Federrückens begrenzt ist,
**dadurch gekennzeichnet,**
**dass** die Steckklammer (1) einen in den Steg (3) des Federrückens reichenden Ausschnitt (11) aufweist, der von der zwischen den Federarmen (8, 9) des einen der beiden Federarmpaare liegenden Schenkelkante ausgeht.

2. Einstückige, aus Federstahlblech gebogene Steckklammer für Flanschverbindungen, insbesondere für Flanschverbindungen von Abgasrohren von Kraftfahrzeugen, mit im Querschnitt U-förmigem Federrücken, der über einen Steg verbundene, in Querrichtung des Steges einander gegenüberliegende und den Längsseiten des Steges zugeordnete Schenkel aufweist, von denen jeweils zwei Federarme ausgehen, die in Längsrichtung des Steges zueinander beabstandet sind, ein Federarmpaar bilden und einander gegenüberliegenden Seiten eines Aufnahmeraumes für die Flansche zugeordnet sind, der zwischen den Federarmen eines Federarmpaares von einer Kante eines Schenkels des Federrückens begrenzt ist,
**dadurch gekennzeichnet,**
**dass** die Steckklammer (21, 31) einen zumindest bis in den Bereich des Steges (3) reichenden Ausschnitt (11) aufweist, der von der zwischen den Federarmen (8, 9) des einen der beiden Federarmpaare liegenden Schenkelkante ausgeht, und dass die beiderseits des Ausschnittes (11) liegenden Bereiche des Federrückens (2) winklig zueinander angestellt sind.

3. Einstückige, aus Federstahlblech gebogene Steckklammer nach Anspruch 2,
**dadurch gekennzeichnet,**
**dass** die beiderseits des Ausschnittes (11) liegenden Bereiche des Federrückens (2) der Steckklammer (21) unter einem sich in Gegenrichtung zu den Federarmen (6 bis 9) öffnenden Winkel zueinander stehen.

4. Einstückige, aus Federstahlblech gebogene Steckklammer nach Anspruch 2,
**dadurch gekennzeichnet,**
**dass** die beiderseits des Ausschnittes (11) liegenden Bereiche des Federrückens (2) der Steckklammer (31) unter einem sich in Richtung auf die Federarme (6 bis 9) öffnenden Winkel zueinander stehen.

5. Einstückige, aus Federstahlblech gebogene Steckklammer nach einem der Ansprüche 2 bis 4,
**dadurch gekennzeichnet,**
**dass** der Schnittpunkt der Längsachsen (22, 23) der winklig zueinander stehenden Bereiche des Federrückens (2) in der die Flanschachse enthaltenden Quermittelebene (Querachse 12) der Steckklammer (21, 31) liegt.

6. Einstückige, aus Federstahlblech gebogene Steckklammer nach einem der Ansprüche 2 bis 5,
**dadurch gekennzeichnet,**
**dass** die axial, d. h. quer zur Flanschebene einander gegenüberliegenden Federarme (6, 8 bzw. 7, 9) zur Vorspannung der Steckklammer gegen ihre freien Enden aufeinander zulaufen.

7. Einstückige, aus Federstahlblech gebogene Steckklammer nach einem der Ansprüche 2 bis 6,
**dadurch gekennzeichnet,**
**dass** der Ausschnitt (11) den Steg (3) im Wesentlichen nur anschneidet.

8. Einstückige, aus Federstahlblech gebogene Steckklammer nach Anspruch 1 oder einem der Ansprüche 2 bis 6,
**dadurch gekennzeichnet,**
**dass** der Ausschnitt (11) sich über den größeren Teil der Breite des Steges (3) erstreckt.

9. Einstückige, aus Federstahlblech gebogene Steckklammer nach Anspruch 1 oder einem der Ansprüche 2 bis 6,
**dadurch gekennzeichnet,**
**dass** der Ausschnitt (11) sich über die Breite des Steges (3) erstreckt.

10. Einstückige, aus Federstahlblech gebogene Steckklammer nach Anspruch 1 oder einem der Ansprüche 2 bis 6,
**dadurch gekennzeichnet,**
**dass** der Ausschnitt (11) bis in den Bereich des Schenkels (4) reicht, der dem Schenkel (3) gegenüberliegt, von dessen Kante der Ausschnitt (11) ausgeht.

11. Einstückige, aus Federstahlblech gebogene Steckklammer nach einem der vorhergehenden Ansprüche,
**dadurch gekennzeichnet,**
**dass** der Ausschnitt (11) einen Teilbereich des in Richtung der Flanschebene gegebenen Abstandes zwischen zwei ein Federarmpaar bildenden Federarmen (8, 9) überdeckt.

12. Einstückige, aus Federstahlblech gebogene Steckklammer nach einem der Ansprüche 1 bis 10,
**dadurch gekennzeichnet,**
**dass** der Ausschnitt (11) den Abstand zwischen zwei ein Federarmpaar bildenden Federarmen (8, 9) überdeckt.

## Claims

1. Single-piece plug-in clamp, which is bent from spring steel sheet, for flanged connections, in particular for flanged connections of exhaust pipes of motor vehicles, having a spring back which is U-shaped in cross section, has a longitudinal axis and has legs which are connected via a web, which is aligned with the longitudinal axis, lie opposite each other in the transverse direction of the web and are assigned to the longitudinal sides of the web, and from which two spring arms emerge in each case, the said spring arms being spaced apart from each other in the longitudinal direction of the web, forming a pair of spring arms and being assigned to mutually opposite sides of a receiving space for the flanges, the receiving space being bounded between the spring arms of a pair of spring arms by an edge of a leg of the spring back, **characterized in that** the plug-in clamp (1) has a cutout (11) which reaches into the web (3) of the spring back and emerges from the leg edge lying between the spring arms (8, 9) of one of the two pairs of spring arms.

2. Single-piece plug-in clamp, which is bent from spring steel sheet, for flanged connections, in particular for flanged connections of exhaust pipes of motor vehicles, having a spring back which is U-shaped in cross section and has legs which are connected via a web, lie opposite each other in the transverse direction of the web and are assigned to the longitudinal sides of the web, and from which two spring arms emerge in each case, the said spring arms being spaced apart from each other in the longitudinal direction of the web, forming a pair of spring arms and being assigned to mutually opposite sides of a receiving space for the flanges, the receiving space being bounded between the spring arms of a pair of spring arms by an edge of a leg of the spring back, **characterized in that** the plug-in clamp (21, 31) has a cutout (11) which reaches at least as far as into the vicinity of the web (3) and emerges from the leg edge lying between the spring arms (8, 9) of one of the two pairs of spring arms, and **in that** those regions of the spring back (2) which lie on both sides of the cutout (11) are positioned at an angle to each other.

3. Single-piece plug-in clamp, which is bent from spring steel sheet, according to Claim 2, **characterized in that** those regions of the spring back (2) of the plug-in clamp (21) which lie on both sides of the cutout (11) are at an angle to each other which opens in the opposite direction to the spring arms (6 to 9).

4. Single-piece plug-in clamp, which is bent from spring steel sheet, according to Claim 2, **characterized in that** those regions of the spring back (2) of the plug-in clamp (31) which lie on both sides of the cutout (11) are at an angle to each other which opens in the direction of the spring arms (6 to 9).

5. Single-piece plug-in clamp, which is bent from spring steel sheet, according to one of Claims 2 to 4, **characterized in that** the intercepting point of the longitudinal axes (22, 23) of those regions of the spring back (2) which are at an angle to each other lies **in that** transverse central plane (transverse axis 12) of the plug-in clamp (21, 31) which contains the flange axis.

6. Single-piece plug-in clamp, which is bent from spring steel sheet, according to one of Claims 2 to 5, **characterized in that** the spring arms (6, 8 and 7, 9) which lie axially opposite each other, i.e. transversely with respect to the plane of the flange, taper towards each other towards their free ends so as to pretension the plug-in clamp.

7. Single-piece plug-in clamp, which is bent from spring steel sheet, according to one of Claims 2 to 6, **characterized in that** the cutout (11) essentially only starts to intercept the web (3).

8. Single-piece plug-in clamp, which is bent from spring steel sheet, according to Claim 1 or one of Claims 2 to 6, **characterized in that** the cutout (11) extends over the greater part of the width of the web (3).

9. Single-piece plug-in clamp, which is bent from spring steel sheet, according to Claim 1 or one of Claims 2 to 6, **characterized in that** the cutout (11) extends over the width of the web (3).

10. Single-piece plug-in clamp, which is bent from spring steel sheet, according to Claim 1 or one of Claims 2 to 6, **characterized in that** the cutout (11) reaches as far as into that region of the leg (4) which lies opposite the leg (3) and from the edge of which the cutout (11) emerges.

11. Single-piece plug-in clamp, which is bent from spring steel sheet, according to one of the preceding claims, **characterized in that** the cutout (11) covers a subregion of the spacing, which is provided in the direction of the plane of the flange, between two spring arms (8, 9) forming a pair of spring arms.

12. Single-piece plug-in clamp, which is bent from spring steel sheet, according to one of Claims 1 to 10, **characterized in that** the cutout (11) covers the distance between two spring arms (8, 9) forming a pair of spring arms.

## Revendications

1. Agrafe à planter en une pièce courbée dans de la tôle d'acier à ressorts pour raccords à brides, notamment pour raccords à brides de tuyaux de gaz d'échappement de véhicules automobiles, comportant un dos à ressort en forme de U dans sa section transversale, présentant un axe longitudinal, qui présente des branches reliées par une traverse s'étendant en alignement par rapport à l'axe longitudinal, opposées l'une à l'autre dans le sens transversal de la traverse, et associées aux côtés longitudinaux de la traverse, dont partent respectivement deux bras à ressorts qui sont écartés l'un de l'autre dans le sens longitudinal de la traverse, forment une paire de bras à ressorts et sont associés aux côtés opposés l'un à l'autre d'un espace d'admission pour les brides, qui est délimité entre les bras à ressorts d'une paire de bras à ressorts par un bord d'une branche du dos à ressort,
**caractérisée en ce que**
l'agrafe à planter (1) présente une découpe (11) allant jusqu'à la traverse (3) du dos à ressort, qui part du bord de la branche se trouvant entre les bras à ressorts (8, 9) de l'une des deux paires de bras à ressorts.

2. Agrafe à planter en une pièce courbée dans de la tôle d'acier à ressorts pour raccords à brides, notamment pour raccords à brides de tuyaux de gaz d'échappement de véhicules automobiles, comportant un dos à ressort en forme de U dans sa section transversale, qui présente des branches reliées par une traverse, opposées l'une à l'autre dans le sens transversal de la traverse, et associées aux côtés longitudinaux de la traverse, dont partent respectivement deux bras à ressorts qui sont écartés l'un de l'autre dans le sens longitudinal de la traverse, forment une paire de bras à ressorts et sont associés aux côtés opposés l'un à l'autre d'un espace d'admission pour les brides, qui est délimité entre les bras à ressorts d'une paire de bras à ressorts par un bord d'une branche du dos à ressort,
**caractérisée en ce que**
l'agrafe à planter (21, 31) présente une découpe (11) allant au moins jusqu'à la zone de la traverse (3) qui part du bord de la branche se trouvant entre les bras à ressorts (8, 9) de l'une des deux paires de bras à ressorts, et que les zones du dos à ressort (2) se trouvant des deux côtés de la découpe (11) sont placées en angle l'une par rapport à l'autre.

3. Agrafe à planter en une pièce courbée dans de la tôle d'acier à ressorts selon la revendication 2,
**caractérisée en ce que**
les zones du dos à ressort (2) de l'agrafe à planter (21) se trouvant des deux côtés de la découpe (11) se situent l'une par rapport à l'autre dans un angle s'ouvrant dans le sens opposé aux bras à ressorts (6 à 9).

4. Agrafe à planter en une pièce courbée dans de la tôle d'acier à ressorts selon la revendication 2,
**caractérisée en ce que**
les zones du dos à ressort (2) de l'agrafe à planter (31) se trouvant des deux côtés de la découpe (11) se situent l'une par rapport à l'autre dans un angle s'ouvrant dans le sens des bras à ressorts (6 à 9).

5. Agrafe à planter en une pièce courbée dans de la tôle d'acier à ressorts selon l'une quelconque des revendications 2 à 4,
**caractérisée en ce que**
le point d'intersection des axes longitudinaux (22, 23) des zones situées en angle l'une par rapport à l'autre du dos à ressort (2) se trouve dans le plan transversal central contenant l'axe de la bride (axe transversal 12) de l'agrafe à planter (21, 31).

6. Agrafe à planter en une pièce courbée dans de la tôle d'acier à ressorts selon l'une quelconque des revendications 2 à 5,
**caractérisée en ce que**
les bras à ressorts (6, 8 ou 7, 9) opposés l'un à l'autre axialement, c'est-à-dire transversalement par rapport au plan de la bride, servant à précontraindre l'agrafe à planter vers ses extrémités libres vont l'un vers l'autre.

7. Agrafe à planter en une pièce courbée dans de la tôle d'acier à ressorts selon l'une quelconque des revendications 2 à 6,
**caractérisée en ce que**
la découpe (11) ne fait substantiellement qu'entailler la traverse (3).

8. Agrafe à planter en une pièce courbée dans de la tôle d'acier à ressorts selon la revendication 1 ou l'une quelconque des revendications 2 à 6,
**caractérisée en ce que**
la découpe (11) s'étend sur la majeure partie de la largeur de la traverse (3).

9. Agrafe à planter en une pièce courbée dans de la tôle d'acier à ressorts selon la revendication 1 ou l'une quelconque des revendications 2 à 6,
**caractérisée en ce que**
la découpe (11) s'étend sur la largeur de la traverse (3).

10. Agrafe à planter en une pièce courbée dans de la tôle d'acier à ressorts selon la revendication 1 ou l'une quelconque des revendications 2 à 6,
**caractérisée en ce que**
la découpe (11) va jusqu'à la zone de la branche (4) qui est opposée à la branche (3) du bord de laquelle part la découpe (11).

11. Agrafe à planter en une pièce courbée dans de la tôle d'acier à ressorts selon l'une quelconque des revendications précédentes,
**caractérisée en ce que**
la découpe (11) recouvre une zone partielle de la distance donnée dans le sens du plan de la bride entre deux bras à ressorts (8, 9) formant une paire de bras à ressorts.

12. Agrafe à planter en une pièce courbée dans de la tôle d'acier à ressorts selon l'une quelconque des revendications 1 à 10,
**caractérisée en ce que**
la découpe (11) recouvre la distance entre deux bras à ressorts (8, 9) formant une paire de bras à ressorts.
